(19) Europäisches Patentamt
European Patent Office
Office européen des brevets

(11) EP 2 204 388 B1

(12) # EUROPEAN PATENT SPECIFICATION

(45) Date of publication and mention of the grant of the patent:
**21.11.2012 Bulletin 2012/47**

(21) Application number: **08843156.4**

(22) Date of filing: **09.09.2008**

(51) Int Cl.:
***C08F 8/00*** (2006.01) ***C08F 8/34*** (2006.01)
***C08F 8/40*** (2006.01) ***C08J 3/24*** (2006.01)
***C08F 8/08*** (2006.01)

(86) International application number:
**PCT/JP2008/066249**

(87) International publication number:
**WO 2009/054197 (30.04.2009 Gazette 2009/18)**

(54) **PROCESS FOR THE PRODUCTION OF WATER-ABSORBING RESINS AND WATER-ABSORBING RESINS OBTAINED BY THE PROCESS**

VERFAHREN ZUR HERSTELLUNG WASSERABSORBIERENDER HARZE UND MIT DIESEM VERFAHREN HERGESTELLTE WASSERABSORBIERENDE HARZE

PROCÉDÉ POUR LA PRODUCTION DE RÉSINES ABSORBANT L'EAU ET RÉSINES ABSORBANT L'EAU OBTENUES PAR LE PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.10.2007 JP 2007275961**

(43) Date of publication of application:
**07.07.2010 Bulletin 2010/27**

(73) Proprietor: **Sumitomo Seika Chemicals Co. Ltd.**
**Kako-gun, Hyogo 675-0145 (JP)**

(72) Inventors:
- **TAKATORI, Junichi c/o Sumitomo Seika Chemicals**
  **Himeji-shi,**
  **Hyogo 672-8076 (JP)**
- **HANDA, Masayoshi c/o Sumitomo Seika Chemicals**
  **Himeji-shi,**
  **Hyogo 672-8076 (JP)**
- **NAWATA, Yasuhiro c/o Sumitomo Seika Chemicals**
  **Kako-gun,**
  **Hyogo 675-0145 (JP)**

(74) Representative: **Vossius & Partner**
**Siebertstrasse 4**
**81675 München (DE)**

(56) References cited:
**WO-A1-2006/033477**
**JP-A- 2002 194 239**
**JP-A- 2003 313 446**
**JP-A- 2006 116 535**
**JP-A- 2006 297 373**
**JP-A- 2007 099 845**
**US-B1- 6 753 434**

- **SINGHA N.K., DE RUITER B., SCHUBERT U.S.: "Atom Transfer Radical Polymerization of 3-Ethyl-3-(acryloxy)methyloxetane" MACROMOLECULES, vol. 38, 4 May 2005 (2005-05-04), pages 3596-3600, XP002600479**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 204 388 B1

## Description

The present invention relates to a method for producing a water-absorbent resin. More specifically, the present invention relates to a method for producing a water-absorbent resin which can be preferably used in hygienic materials such as disposable diaper, incontinence pad and sanitary napkin; herein disclosed is further a water-absorbent resin obtained by the method.

Conventionally, a water-absorbent resin has been widely used in hygienic materials such as disposable diaper and sanitary napkin, and industrial materials such as water blocking materials for cables. As the water-absorbent resin, there has been known, for example, hydrolysates of starch-acrylonitrile graftcopolymers, neutralized products of starch-acrylate graftpolymers, saponified products of vinyl acetate-acrylic ester copolymers and partially neutralized products of polyacrylic acid.

Among them, it has been desired that the water-absorbent resin used in hygienic materials is excellent in various properties such as water-retention capacity (absorption capacity), water-absorption capacity under load, water-absorption rate, and particle size distribution. In the past, in order to improve particularly the water-retention capacity and the water-absorption capacity under load of the various properties mentioned above, there is proposed a method of increasing a crosslinking density in a surface vicinity of the water-absorbent resin (post-crosslinking method).

Also, the water-absorbent resin used e.g. in disposable diaper and sanitary napkin is required to have reduced water-soluble substance and to be excellent in safety, besides the above-mentioned properties. For instance, in the case where there is a large amount of the water-soluble substance, the water-soluble substance is eluted after liquid absorption, and slimy liquid is adhered to the skin, thereby causing a possible irritation.

In reply to such demands, as a method for improving the above-mentioned properties (in particular, the water-retention capacity and the water-absorption capacity under load) while giving consideration to safety, for example, there has been suggested a method of increasing a crosslinking density in a surface vicinity of the water-absorbent resin, according to a method including the step of mixing with an oxetane compound and a water-soluble additive (see Patent Publications 1 and 2), a method including the steps of mixing with a ketal compound or an acetal compound and heat-treating the mixture (see Patent Publication 3) or a method including the steps of mixing with a specified oxazoline compound and treating the mixture (see Patent Publication 4). However, even with these technologies, the above-mentioned properties have not yet been satisfactory enough. Also, there are some disadvantages that the crosslinking agents disclosed in these publications require high temperatures upon the crosslinking reaction. Moreover, a water-absorbing agent which comprises a polycarboxylic acid water-absorbent resin surface cross-linked by 3-ethyl-3-hydroxymethyl oxetane is described in the literature (see Patent Publication 5)

Therefore, there has been desired the development of a water-absorbent resin which is excellent in various properties such as water-retention capacity and water-absorption capacity under load, and gives consideration to safety, such as having a reduced water-soluble substance, using a crosslinking agent reactive at a low reaction temperature.

Patent Publication 1: Japanese Patent Laid-Open No. 2002-194239
Patent Publication 2: Japanese Patent Laid-Open No. 2003-313446
Patent Publication 3: Japanese Patent Laid-Open No. Hei 08-027278
Patent Publication 4: Japanese Patent Laid-Open No. 2000-197818
Patent Publication 5: WO 2006/033477 A1

An object of the present invention is to provide a method for producing a water-absorbent resin which can be preferably used in hygienic materials, which is excellent in various properties such as water-retention capacity and water-absorption capacity under load, and gives consideration to safety, such as having a reduced water-soluble substance, using a crosslinking agent reactive at a low reaction temperature; therein disclosed is further a water-absorbent resin obtained by the method.

The present inventors have found that a water-absorbent resin which can be preferably used in hygienic materials, which is excellent in various properties such as water-retention capacity and water-absorption capacity under load, and gives consideration to safety, such as having a reduced water-soluble substance is obtained by evenly crosslinking in a surface vicinity of the water-absorbent resin precursor in a high crosslinking density at a low reaction temperature, using a specified crosslinking agent to increase a crosslinking density in a surface vicinity of the water-absorbent resin precursor. The present invention has been perfected thereby.

Specifically, the present invention relates to a method for producing a water-absorbent resin, characterized by adding an oxetane compound represented by the following general formula (1):

[Ka 1]

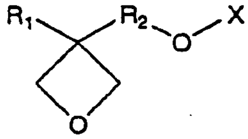

(1)

wherein $R_1$ is an alkyl group having 1 to 6 carbon atoms; $R_2$ is an alkanediyl group having 1 to 6 carbon atoms; and X is a group containing at least one group selected from the group consisting of carbonyl group, phosphoryl group, and sulfonyl group,
to a water-absorbent resin precursor obtainable by polymerizing water-soluble ethylenically unsaturated monomers, and subjecting the components to a post-crosslinking reaction while heating.

According to the present invention, a surface vicinity of a water-absorbent resin precursor is evenly crosslinked in a high crosslinking density at a low reaction temperature using a specified crosslinking agent, whereby a water-absorbent resin which can be preferably used in hygienic materials, which is excellent in properties such as water-retention capacity and water-absorption capacity under load, and gives consideration to safety, such as having a reduced water-soluble substance can be obtained.

[Figure 1] Figure 1 is a schematic view showing an outline constitution of an apparatus for measuring water-absorption capacity under load of the water-absorbent resin.

X measurement apparatus
1 buret section
10 buret
11 air inlet tube
12 cock
13 cock
14 rubber plug
2 lead tube
3 measuring board
4 measuring section
40 cylinder
41 nylon mesh
42 weight
5 water-absorbent resin

In the present invention, a method of polymerizing a water-soluble ethylenically unsaturated monomer to obtain a water-absorbent resin precursor is not particularly limited, and includes an aqueous solution polymerization method and a reversed-phase suspension polymerization method, which are the representative polymerization methods.

In the present specification, as one example of the embodiments, the reversed-phase suspension polymerization method is explained in more detail. In the above-mentioned method, a reversed-phase suspension polymerization of a water-soluble ethylenically unsaturated monomer in a water-in-oil system is carried out, for example, using a radical polymerization initiator, in a petroleum hydrocarbon medium containing a surfactant and/or a polymeric dispersion agent, with the addition of a crosslinking agent and a chain transfer agent as occasion demands. Incidentally, in the above-mentioned reversed-phase suspension polymerization method, the water-absorbent resin precursor can be obtained by additionally adding the water-soluble ethylenically unsaturated monomer to the water-absorbent resin precursor obtained by the reversed-phase suspension polymerization and carrying out a polymerization in multi-steps of two or more steps.

The water-soluble ethylenically unsaturated monomer includes, for example, (meth)acrylic acid, 2-(meth)acrylamide-2-methylpropanesulfonic acid and alkali metal salts thereof; nonionic unsaturated monomers such as (meth)acrylamide, N,N-dimethyl(meth)acrylamide, 2-hydroxyethyl (meth)acrylate, and N-methylol(meth)acrylamide; amino group-containing unsaturated monomers such as diethylaminoethyl (meth)acrylate and diethylaminopropyl (meth)acrylate, and quaternary compounds thereof. These may be used alone or in combination of two or more kinds. Here, "(meth)acryl-" herein means "acryl-" and "methacryl-."

Among the above-mentioned water-soluble ethylenically unsaturated monomers, (meth)acrylic acid and alkali metal salts thereof, (meth)acrylamide, and N,N-dimethyl(meth)acrylamide are preferably used, from the viewpoint of being industrially easily available. Further, (meth)acrylic acid and alkali metal salts thereof are more preferably used, from the viewpoint of high water-absorption properties of the resulting water-absorbent resin.

The water-soluble ethylenically unsaturated monomer can be usually used in the form of an aqueous solution. It is preferable that the concentration of the water-soluble ethylenically unsaturated monomers in the aqueous solution

of the water-soluble ethylenically unsaturated monomers is from 15% by mass to a saturated concentration.

In the aqueous solution of the water-soluble ethylenically unsaturated monomer, when the water-soluble ethylenically unsaturated monomer used contains an acid group, the acid group may be neutralized with an alkaline neutralizer which contains an alkali metal. It is preferable that the degree of neutralization by the above-mentioned alkaline neutralizer is from 10 to 100% by mol of the acid group of the water-soluble ethylenically unsaturated monomer before the neutralization, from the viewpoint of increasing an osmotic pressure of the resulting water-absorbent resin and not causing any disadvantages in safety due to the presence of an excess alkaline neutralizer. The alkali metal includes lithium, sodium and potassium. Among them, sodium and potassium are preferably used, and sodium is more preferably used.

The radical polymerization initiator includes, for example, persulfates such as potassium persulfate, ammonium persulfate, and sodium persulfate; peroxides such as methyl ethyl ketone peroxide, methyl isobutyl ketone peroxide, di-tert-butyl peroxide, tert-butyl cumyl peroxide, tert-butyl peroxyacetate, tert-butyl peroxyisobutyrate, tert-butyl peroxypivalate, and hydrogen peroxide; azo compounds such as 2,2'-azobis(2-amidinopropane)dihydrochloride, 2,2'-azobis[2-(N-phenylamidino)propane]dihydrochloride, 2,2'-azobis[2-(N-allylamidino)propane]dihydrochloride, 2,2'-azobis{2-[1-(2-hydroxyethyl)-2-imidazolin-2-yl]propane}dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid).

These radical polymerization initiators may be used alone or in combination of two or more kinds. Among them, potassium persulfate, ammonium persulfate, sodium persulfate, and 2,2'-azobis(2-amidinopropane)dihydrochloride are preferably used, from the viewpoint of being industrially easily available and excellent in storage stability.

Usually, the radical polymerization initiator is used in each reaction step in an amount of preferably from 0.005 to 1% by mol, based on the amount of the water-soluble ethylenically unsaturated monomer used in each reaction step, from the viewpoint of shortening the time period of the polymerization reaction and preventing a rapid polymerization reaction.

The above-mentioned radical polymerization initiator can be used as a redox polymerization initiator together with a reducing agent such as sodium sulfite, sodium hydrogen sulfite, ferrous sulfite, or L-ascorbic acid.

The petroleum hydrocarbon medium includes, for example, aliphatic hydrocarbons such as n-hexane, n-heptane, n-octane, and ligroin; alicyclic hydrocarbons such as cyclopentane, methylcyclopentane, cyclohexane, and methylcyclohexane; aromatic hydrocarbons such as benzene, toluene, and xylene. Among them, n-hexane, n-heptane, and cyclohexane are preferably used, from the viewpoint of being industrially easily available, stable in quality, and inexpensive. These petroleum hydrocarbon mediums may be used alone or may be used in combination of two or more kinds.

Usually, the petroleum hydrocarbon medium is contained in an amount of preferably from 50 to 600 parts by mass, and more preferably from 80 to 550 parts by mass, based on 100 parts by mass of the amount of the water-soluble ethylenically unsaturated monomers used in each reaction step, from the viewpoint of removing heat of polymerization and making the polymerization temperature easier to control.

The surfactant includes, for example, polyglycerol fatty acid esters, sucrose fatty acid esters, sorbitan fatty acid esters, polyoxyethylene sorbitan fatty acid esters, polyoxyethylene glycerol fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallylformaldehyde condensed polyoxyethylene ethers, polyoxyethylene polyoxypropylene block copolymer, polyoxyethylene polyoxypropyl alkyl ethers, polyethylene glycol fatty acid esters, polyoxyethylene alkylamines, phosphoric esters of polyoxyethylene alkyl ethers, and phosphoric esters of polyoxyethylene alkylallyl ethers. Among them, sorbitan fatty acid esters, polyglycerol fatty acid esters and sucrose fatty acid esters are preferably used. These surfactants may be used alone or in combination of two or more kinds.

The polymeric dispersion agent includes, for example, maleic anhydride-modified polyethylene, maleic anhydride-modified polypropylene, maleic anhydride-modified ethylene-propylene copolymer, maleic anhydride-modified EPDM (ethylene-propylene-diene terpolymer), maleic anhydride-modified polybutadiene, ethylene-maleic anhydride copolymer, ethylene-propylene-maleic anhydride copolymer, butadienemaleic anhydride copolymer, oxidized polyethylene, ethylene-acrylic acid copolymer, ethyl cellulose and ethyl hydroxyethyl cellulose. Among them, maleic anhydride-modified polyethylene, maleic anhydride-modified polypropylene, maleic anhydride-modified ethylene-propylene copolymer, oxidized polyethylene and ethylene-acrylic acid copolymer are preferably used, from the viewpoint of dispersion stability of the aqueous solution of the monomer. These polymeric dispersion agents may be used alone or in combination of two or more kinds.

Each of the surfactant and/or the polymeric dispersion agent is used in an amount of preferably from 0.1 to 5 parts by mass, and more preferably from 0.2 to 3 parts by mass, based on 100 parts by mass of the total amount of the aqueous solution of the water-soluble ethylenically unsaturated monomers in each reaction step, in order to keep an excellent dispersion state of the aqueous solution of the monomer in the petroleum hydrocarbon medium, and to obtain dispersion effects accounting to the amount used.

In the present invention, the polymerization reaction can be carried by adding, as an internal crosslinking agent,

a compound having a plurality of polymerizable unsaturated groups to the water-soluble ethylenically unsaturated monomer. The internal crosslinking agent mentioned above includes, for example, unsaturated (poly)esters obtained by reacting polyols such as diols and triols, such as (poly)ethylene glycol [The term "(poly)" means cases where the prefix "poly" is included and where the prefix is not included. In other words, "(poly)" means a polymer compound and a monomer compound. Hereinafter referred to the same], (poly)propylene glycol, 1,4-butanediol, trimethylolpropane, polyoxyethylene glycol, polyoxypropylene glycol, or (poly)glycerol with an unsaturated acid such as (meth)acrylic acid, maleic acid or fumaric acid; bisacrylamides such as N,N'-methylenebisacrylamide; di- or tri(meth)acrylate esters obtained by reacting a polyepoxide with (meth)acrylic acid; carbamyl esters of di(meth)acrylic acid obtained by reacting a polyisocyanate such as tolylene diisocyanate or hexamethylene diisocyanate with hydroxyethyl (meth)acrylate; allylated starch, allylated cellulose, diallyl phthalate, N,N',N"-triallyl isocyanurate and divinylbenzene

In addition, as the other internal crosslinking agents, a compound having a reactive functional group capable of reacting with a carboxyl group can be used. The compound having a reactive functional group capable of reacting with a carboxyl group includes, for example, hydroxyalkyl (meth)acrylates such as hydroxymethyl (meth)acrylate and hydroxyethyl (meth)acrylate; N-hydroxyalkyl(meth)acrylamides such as N-hydroxymethyl(meth)acrylamide and N-hydroxyethyl(meth)acrylamide.

These internal crosslinking agents may be used in combination of two or more kinds.

The internal crosslinking agent is used in an amount of preferably 1% by mol or less, and more preferably 0.5% by mol or less, based on the amount of the water-soluble ethylenically unsaturated monomer used in each reaction step, from the viewpoint of appropriately crosslinking the resulting water-absorbent resin, thereby suppressing the water solubility of the water-absorbent resin and sufficiently enhancing water-absorption capacity of the resulting resin.

In addition, in order to control water-absorption properties of the water-absorbent resin, a chain transfer agent may be added. As the above-mentioned chain transfer agent, hypophosphites, phosphites, thiols, secondary alcohols and amines can be exemplified.

The reaction temperature upon the polymerization reaction differs depending upon the radical polymerization initiator used. The reaction temperature is preferably from 20° to 110°C and more preferably from 40° to 90°C, from the viewpoint of rapid progress of the polymerization and shortening the polymerization time, thereby increasing productivity and easily removing heat of polymerization, to smoothly carry out the reaction. The reaction time is usually from 0.1 to 4 hours.

Water and the petroleum hydrocarbon medium may be removed from the mixture after the polymerization reaction, for example, by heating the mixture at a temperature of from 80° to 200°C.

As described above, the reversed-phase suspension polymerization is carried out, to give a water-absorbent resin precursor.

The present invention is characterized by adding an oxetane compound as a post-crosslinking agent represented by the following general formula (1):

[Ka 2]

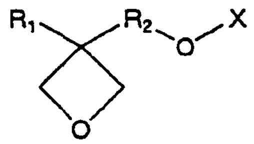

(1)

to the above-mentioned water-absorbent resin precursor, and subjecting the components to a post-crosslinking reaction while heating.

In the formula (1), $R_1$ is an alkyl group having 1 to 6 carbon atoms. The alkyl group having 1 to 6 carbon atoms includes, for example, methyl group, ethyl group, n-propyl group, isopropyl group, n-butyl group, t-butyl group, n-pentyl group and n-hexyl group.

In the formula (1), $R_2$ is an alkanediyl group having 1 to 6 carbon atoms, and includes, for example, methylene group, ethylene group, n-propylene group, isopropylene group, n-butylene group, n-isobutylene group, n-pentylene group and n-hexylene group.

In the formula (1), X is a group containing at least one group selected from the group consisting of carbonyl group, phosphoryl group, and sulfonyl group. Specific examples of the group containing carbonyl group include, for example, acetyl group and propionyl goup. Specific examples of the group containing phosphoryl group include, for example, dimethylphosphono group and diethylphosphono group. Specific examples of the group containing sulfonyl group include, for example, methanesulfonyl group, ethanesulfonyl group, 1-propanesulfonyl group, and chloromethanesulfonyl group. Among them, the group containing the phosphoryl group or the sulfonyl group is preferred, and the group containing the sulfonyl group is more preferred, from the viewpoint of reactivity.

Specific examples of the oxetane compound represented by the formula (1) include, for example, oxetane

compounds containing carbonyl group, such as ((3-methyloxetan-3-yl)methyl) acetate, ((3-ethyloxetan-3-yl)methyl) acetate, ((3-n-propyloxetan-3-yl)methyl) acetate, ((3-n-hexyloxetan-3-yl)methyl) acetate, ((3-methyloxetan-3-yl)methyl) propionate, ((3-ethyloxetan-3-yl)methyl) propionate, 2-(3-methyloxetan-3-yl)ethyl) acetate, and (2-(3-ethyloxetan-3-yl) ethyl) acetate; oxetane compounds containing phosphoryl group, such as ((3-methyloxetan-3-yl)methyl) dimethylphosphate, ((3-methyloxetan-3-yl)methyl) diethylphosphate, ((3-ethyloxetan-3-yl)methyl) dimethylphosphate, ((3-ethyloxetan-3-yl)methyl) diethylphosphate, (2-(3-methyloxetan-3-yl)ethyl) dimethylphosphate, and (2-(3-ethyloxetan-3-yl)ethyl) diethylphosphate; oxetane compounds containing sulfonyl group, such as ((3-methyloxetan-3-yl)methyl) methanesulfonate, ((3-ethyloxetan-3-yl)methyl) methanesulfonate, ((3-n-propyloxetan-3-yl)methyl) methanesulfonate, ((3-n-hexyloxetan-3-yl)methyl) methanesulfonate, ((3-methyloxetan-3-yl)methyl) ethanesulfonate, ((3-ethyloxetan-3-yl)methyl) ethanesulfonate, (2-(3-methyloxetan-3-yl)ethyl) methanesulfonate, (2-(3-ethyloxetan-3-yl)ethyl) methanesulfonate, ((3-methyloxetan-3-yl)methyl) chloromethanesulfonate, and ((3-ethyloxetan-3-yl)methyl) chloromethanesulfonate. Among them, the oxetane compounds containing phosphoryl group or sulfonyl group are preferably used, and the oxetane compounds containing sulfonyl group are more preferably used. Among the compounds containing sulfonyl group, especially, ((3-methyloxetan-3-yl)methyl) methanesulfonate, ((3-ethyloxetan-3-yl)methyl) methanesulfonate, ((3-methyloxetan-3-yl)methyl) chloromethanesulfonate, and ((3-ethyloxetan-3-yl)methyl) chloromethanesulfonate are preferably used. These oxetane compounds may be used alone or in combination of two or more kinds.

The oxetane compound represented by the formula (1) can be produced by, for example, a method including the step of reacting 3-ethyl-3-hydroxymethyloxetane and methanesulfonyl chloride in the presence of a base (Japanese Patent Laid-Open No. 2000-319577).

The amount of the oxetane compound used cannot be unconditionally determined since the amount varies depending upon the kinds of the compound used. The oxetane compound is usually used in an amount of preferably from 0.001 to 5% by mol, more preferably from 0.01 to 3% by mol, and still more preferably from 0.1 to 2% by mol, based on a total amount of the water-soluble ethylenically unsaturated monomers used for obtaining the water-absorbent resin precursor, from the viewpoint of sufficiently increasing the crosslinking density in a surface vicinity of the water-absorbent resin, thereby enhancing various properties such as water-absorption capacity under load, and preventing excess crosslinking reactions, thereby enhancing water-retention capacity.

In the present invention, it is possible to mix a known crosslinking agent in addition to the above-mentioned oxetane compound during the post-crosslinking reaction. The post-crosslinking agent including the oxetane compound is preferably used by dissolving in a solvent. The kinds of the solvent include water; alcohols such as methyl alcohol, ethyl alcohol, propyl alcohol, and isopropyl alcohol; ketones such as acetone and methyl ethyl ketone. These solvents may be used alone or in combination of two or more kinds. Among them, water and alcohols are preferably used.

The above-mentioned solvent is used in an amount of preferably from 1 to 50 parts by mass, more preferably from 1 to 40 parts by mass, and still more preferably from 5 to 40 parts by mass, based on 100 parts by mass of the water-absorbent resin precursor.

The timing for adding the post-crosslinking agent containing the oxetane compound is not particularly limited, as long as the timing is after obtaining the water-absorbent resin precursor by polymerizing the water-soluble ethylenically unsaturated monomers. The method includes, for example, a method including the step of adding the post-crosslinking agent to a water-containing gel of the water-absorbent resin precursor after polymerization, a method including the steps of adjusting water in the water-absorbent resin precursor by dehydrating and drying a water-containing gel after polymerization, and thereafter adding the post-crosslinking agent thereto and a method including the step of adding the post-crosslinking agent to the water-absorbent resin precursor obtained by dehydrating and drying a water-containing gel of a water-absorbent resin precursor after polymerization, together with an appropriate amount of water (here, the water-absorbent resin precursor may be used in a state of dispersing in a petroleum hydrocarbon medium, as occasion demands).

The post-crosslinking agent is added to the water-absorbent resin precursor, and thereafter the post-crosslinking reaction is carried out while distilling off water and/or a petroleum hydrocarbon medium by heating, whereby the water-absorbent resin of the present invention can be obtained.

The water content of the water-absorbent resin precursor immediately prior to adding the post-crosslinking agent is preferably 65% by mass or less, more preferably from 1 to 50% by mass or less, still more preferably from 5 to 50% by mass or less, and still more preferably from 5 to 33% by mass or less. Here, the "water content" is a value as measured by the measurement method described below.

By adding a post-crosslinking agent including the oxetane compound to the water-absorbent resin precursor, mixing them and thereafter heating, a surface vicinity of the water-absorbent resin precursor can be crosslinked. The temperature for the above-mentioned heating is preferably from 50° to 170°C, more preferably from 80° to 160°C, and still more preferably from 90° to 150°C, from the viewpoint of rapidly and evenly crosslinking in a surface vicinity of the water-absorbent resin precursor, thereby enhancing various properties such as water-retention capacity and water-absorption capacity under load, and preventing the decomposition or degradation of the water-absorbent resin. In addition, the reaction time is preferably from 0.1 to 6 hours, and more preferably from 0.5 to 5 hours.

An additive such as a lubricant, a deodorizing agent or an antimicrobial agent may be further added to the water-absorbent resin of the present invention according to its purpose.

The water-absorbent resin obtained by the production method of the present invention has a water-retention capacity of physiological saline of 30 g/g or more, a water-absorption capacity of physiological saline under load of 2.07 kPa of 28 mL/g or more, and contains a water-soluble substance of 20% by mass or less. Since the water-absorbent resin obtained by the method of the present invention is excellent in various properties such as water-retention capacity, and water-absorption capacity under load, and also gives consideration to safety such as having a reduced water-soluble substance, the water-absorbent resin can be preferably used in hygienic materials.

Here, water-retention capacity of physiological saline, water-absorption capacity of physiological saline under load of 2.07 kPa, and water-soluble substance are the values measured according to the measurement method as set forth below.

The water-absorbent resin has a water-retention capacity of physiological saline of preferably 30 g/g or more, more preferably 35 g/g or more, even more preferably 40 g/g or more, and even more preferably from 40 to 70 g/g, from the viewpoint of, upon being used in a hygienic material, increasing water-absorption capacity and lowering the amount of re-wet of liquid.

In addition, the water-absorbent resin has a water-absorption capacity of physiological saline under load of 2.07 kPa of preferably 28 mL/g or more, more preferably 29 mL/g or more, even more preferably 30 mL/g or more, and even more preferably from 30 to 45 mL/g, from the viewpoint of, upon being used in a hygienic material, lowering the amount of re-wet of liquid in a case where pressure is applied to the hygienic material after liquid absorption.

The water-absorbent resin has a water-soluble substance of preferably 20% by mass or less, more preferably 18% by mass or less, and even more preferably 16% by mass or less, from the viewpoint of upon being used in a hygienic material, preventing adhesion of the slimy liquid to the skin.

As above-mentioned, a water-absorbent resin precursor is obtained by polymerizing a water-soluble ethylenically unsaturated monomer, and thereafter an oxetane compound is added thereto as a crosslinking agent, to carry out a post-crosslinking reaction, whereby a water-absorbent resin which is excellent in various properties such as water-retention capacity, and water-absorption capacity under load can be obtained.

The reason why the oxetane compound according to the present invention is useful as a post-crosslinking agent is not clear. It is presumed as follows. Specifically, a water-absorbent resin precursor is reacted with the oxetane compound of the present invention as a post-crosslinking agent, whereby as a first step of the reaction, for example, the carbonyl group contained in the water-absorbent resin precursor and the $\alpha$-carbon on the $R_2$ site of the oxetane compound cause a nucleophilic substitution reaction, thereby generating an acid derived from the X site as a leaving group. This generated acid exists in the vicinity of the oxetane ring on a molecular level, and acts as a catalyst for an oxetane ring-opening reaction in the subsequent step, so that the crosslinking reaction progresses efficiently. Therefore, especially in a case where X is a group containing sulfonyl group, it is presumed that the effects of the acid as a leaving group and a catalyst are enhanced, and thereby the crosslinking reaction efficiently progresses.

The present invention will be further specifically described hereinbelow by means of Synthesis Examples, Production Examples, Examples and Comparative Examples, without intending to limit the scope of the present invention to these Synthesis Examples, Production Examples and Examples.

The evaluations of the water-absorbent resin obtained in each of Examples and Comparative Examples were made in accordance with the following procedures.

(1) Water-Retention Capacity of Physiological Saline

The amount 2.0 g of water-absorbent resin was weighed in a cotton bag (Cottonbroad No. 60, width 100 mm x length 200 mm), and placed in a 500 mL-beaker. Physiological saline (0.9% by mass aqueous solution of sodium chloride, hereinafter referred to the same) was poured into the cotton bag in an amount of 500 g at one time, and the physiological saline was dispersed so as not to generate an unswollen lump of the water-absorbent resin. The upper part of the cotton bag was tied up with a rubber band, and the cotton bag was allowed to stand for 1 hour, to sufficiently swell the water-absorbent resin. The cotton bag was dehydrated for 1 minute with a dehydrator (manufactured by Kokusan Enshinki Co., Ltd., product number: H-122) set to have a centrifugal force of 167G. The mass Wa (g) of the cotton bag containing swollen gels after the dehydration was measured. The same procedures were carried out without adding water-absorbent resin, and the empty mass Wb (g) of the cotton bag upon wetting was measured. The water-retention capacity was calculated from the following formula.

$$\text{Water-Retention Capacity of Physiological Saline (g/g)} = [Wa - Wb]\ (g)/\text{Mass of Water-Absorbent Resin (g)}$$

(2) Water-Absorption Capacity of Physiological Saline Under Load of 2.07 kPa

The water-absorption capacity of physiological saline of water-absorbent resin under load of 2.07 kPa was measured using a measurement apparatus X of which outline constitution was shown in Figure 1.

The measurement apparatus X shown in Figure 1 comprises a buret section 1, a lead tube 2, a measuring board 3, and a measuring section 4 placed on the measuring board 3. To the buret section 1 are connected a rubber plug 14 on the top of a buret 10, and an air inlet tube 11 and a cock 12 at the bottom portion of the buret 10, and further, the air inlet tube 11 has a cock 13 at the end. The lead tube 2 is attached between the buret section 1 and the measuring board 3. The lead tube 2 has a diameter of 6 mm. A hole of a diameter of 2 mm is made at the central section of the measuring board 3, and the lead tube 2 is connected thereto. The measuring section 4 has a cylinder 40, a nylon mesh 41 adhered to the bottom part of the cylinder 40, and a weight 42. The cylinder 40 has an inner diameter of 2.0 cm. The nylon mesh 41 has an opening of 200 mesh (sieve opening: 75 μm), and is configured so as a predetermined amount of the water-absorbent resin 5 to be evenly spread over the nylon mesh 41. The weight 42 has a diameter of 1.9 cm and a mass of 59.8 g. This weight 42 is placed on the water-absorbent resin 5, so that load of 2.07 kPa can be evenly applied to the water-absorbent resin 5.

In the measurement apparatus X having the configuration above-mentioned, first, the cock 12 and the cock 13 at the buret section 1 are closed, and a physiological saline adjusted to 25°C is poured from the top of the buret 10 and the top of the buret is plugged with the rubber plug 14. Thereafter, the cock 12 and the cock 13 at the buret section 1 are opened. Next, the height of the measuring board 3 is adjusted so that the end of the lead tube 2 in the central section of the measuring board 3 and an air introduction port of the air inlet tube 11 are at the same height.

On the other hand, 0.10 g of the water-absorbent resin 5 is evenly spread over the nylon mesh 41 in the cylinder 40, and the weight 42 is placed on the water-absorbent resin 5. The measuring section 4 is placed so that its center is in alignment with a lead tube port in the central section of the measuring board 3.

The volume reduction of the physiological saline in the buret 10, i.e., the volume of the physiological saline absorbed by the water-absorbent resin 5, Wc (mL), is continuously read off, from a time point where the water-absorbent resin 5 started absorbing water. The water-absorption capacity of physiological saline under load of the water-absorbent resin 5 after 60 minutes passed from a time point of starting water absorption was obtained by the following formula.

$$\text{Water-Absorption Capacity of Physiological Saline Under Load (mL/g)} = \text{Wc (mL)}/0.10\ \text{(g)}$$

(3) Water-Soluble Substance

The amount 500±0.1 g of physiological saline was weighed out in a 500 mL-beaker. A magnetic stirrer bar (8 mm ϕ × 30 mm, ringless) was placed therein, and the beaker was placed on a magnetic stirrer (HS-30D, manufactured by iuchi). Subsequently, the magnetic stirrer bar was adjusted so as to rotate at a rate of 600 r/min. In addition, a bottom of a vortex generated by rotation of the magnetic stirrer bar was adjusted so as to be near an upper portion of the magnetic stirrer bar.

Next, 2.0±0.002 g of a water-absorbent resin was quickly poured between the center of vortex in the beaker and the side of the beaker and dispersed therein, and the mixture was stirred for 3 hours. The aqueous dispersion of the water-absorbent resin after stirring for 3 hours was filtered with a standard sieve (opening of sieve: 75 μm), and the resulting filtrate was further subjected to suction filtration using a Kiriyama type funnel (Filter Paper No. 6).

The amount 80 ± 0.0005 g of the resulting filtrate was weighed out in a 100 mL-beaker adjusted to a constant weight. The filtrate was dried with a forced convection oven (FV-320, manufactured by ADVANTEC) set at an internal temperature of 140°C until a constant weight was attained, and the mass Wd (g) of the solid content of the filtrate was determined.

On the other hand, the same procedures as the above were carried out without using the water-absorbent resin, and the mass We (g) of the solid content of the filtrate was measured. The water-soluble substance was calculated from the following formula.

$$\text{Water-Soluble Substance (\% by mass)} = [[(\text{Wd} - \text{We}) \times (500/80)]/2] \times 100$$

(4) Average Particle Diameter

JIS standard sieves, a sieve having an opening of 850 μm, a sieve having an opening of 600 μm, a sieve having an opening of 425 μm, a sieve having an opening of 300 μm, a sieve having an opening of 150 μm, a sieve having an opening of 75 μm, and a receiving tray were combined in order from the top. About 100 g of the water-absorbent resin was placed on an uppermost sieve, and shaken for 20 minutes with a rotating and tapping shaker machine.
Next, the relationships between the opening of the sieve and an integral of a mass percentage remaining on the sieve were plotted on a logarithmic probability paper by calculating the mass of the water-absorbent resin particles remaining on each sieve as a mass percentage to an entire amount, and accumulating the mass percentages in order, starting from those having larger particle diameters. A particle diameter corresponding to 50% by mass in the cumulative mass percentage is defined as an average particle diameter by joining the plots on the probability paper in a straight line.

(5) Drying Loss (Water Content) of Water-Absorbent Resin and Water-Absorbent Resin Precursor

The amount 2.0 g of the water-absorbent resin (water-absorbent resin precursor) was precisely weighed out (Wg (g)) in an aluminum foil case (No. 8) of which constant weight (Wf (g)) was previously attained. The above sample was dried for 2 hours with a forced convection oven (manufactured by ADVANTEC) set at an internal temperature of 105°C. Thereafter, the dried sample was allowed to be cooled in a desiccator, and the mass Wh (g) after drying was measured. The drying loss (water content) of the water-absorbent resin (water-absorbent resin precursor) was calculated from the following formula.

$$\text{Drying Loss (Water Content) (\% by Mass)}$$
$$= [(Wg - Wf) - (Wh - Wf)]/(Wg - Wf) \times 100$$

[Synthesis Example 1 of Crosslinking Agent] (Synthesis of ((3-Ethyloxetan-3-yl)methyl) Methanesulfonate (compound of the formula (1), wherein $R_1$ = ethyl group, $R_2$ = methylene group, and X = methanesulfonyl group)

A 1-liter four-neck flask equipped with a thermometer, a stirrer, a reflux condenser, a dropping funnel and a nitrogen gas inlet tube was charged with 44.1 g (0.38 mol) of 3-ethyl-3-hydroxymethyloxetane, 44.6 g (0.44 mol) of triethylamine and 220 g of toluene. The contents were externally cooled in an ice-water bath until the internal temperature was 5°C under a nitrogen gas atmosphere. Next, 45.8 g (0.4 mol) of methanesulfonyl chloride was added dropwise so as the internal temperature not to exceed 10°C. Thereafter, the temperature was allowed to return to room temperature, and the contents were reacted for additional 2 hours while stirring. After the reaction, the produced triethylamine hydrochloride was filtered off, and washed with a small amount of toluene, to give a reaction filtrate. To this reaction filtrate was added 114 g of ion-exchanged water, and the mixture was stirred for 30 minutes. The reaction mixture was transferred to a separatory funnel to allow separation into layers, and the organic layer obtained was concentrated at a water bath temperature of 85°C and a degree of reduced pressure of 75 mmHg, to give 66.4 g of a desired ((3-ethyloxetan-3-yl) methyl) methanesulfonate (0.34 mol, yield: 90%, purity 85%). Here, the purity was obtained from an areal ratio of the peaks in the chart obtained by gas chromatography.

[Synthesis Example 2 of Crosslinking Agent] (Synthesis of ((3-Ethyloxetan-3-yl)methyl) Chloromethanesulfonate (compound of the formula (1), wherein $R_1$ = ethyl group, $R_2$ = methylene group, and X = chloromethanesulfonyl group)

A 1-liter four-neck flask equipped with a thermometer, a stirrer, a reflux condenser, a dropping funnel and a nitrogen gas inlet tube was charged with 44.1 g (0.38 mol) of 3-ethyl-3-hydroxymethyloxetane, 44.6 g (0.44 mol) of triethylamine and 220 g of toluene. The contents were externally cooled in an ice-water bath until the internal temperature was 5°C under a nitrogen gas atmosphere. Next, 59.6 g (0.4 mol) of chloromethylsulfonyl chloride was added dropwise so as the internal temperature not to exceed 10°C. Thereafter, the temperature was allowed to return to room temperature, and the contents were reacted for additional 2 hours while stirring. After the reaction, the produced triethylamine hydrochloride was filtered off, and washed with a small amount of toluene, to give a reaction filtrate. To this reaction filtrate was added 114 g of ion-exchanged water, and the mixture was stirred for 30 minutes. The reaction mixture was transferred to a separatory funnel to allow separation into layers, and the organic layer obtained was concentrated at a water bath temperature of 85°C and a degree of reduced pressure of 75 mmHg, to give 68.0 g of a desired ((3-ethyloxetan-3-yl) methyl) chloromethanesulfonate (0.30 mol, yield: 78%, purity 74%). Here, the purity was obtained from an areal ratio of the peaks in the chart obtained by gas chromatography.

Production Example 1

A 2-L cylindrical round bottomed separable flask having an internal diameter of 110 mm, equipped with a reflux condenser, a dropping funnel, a nitrogen gas inlet tube, a stirrer, and a stirring blade was prepared. This flask was charged with 340 g of n-heptane, and 0.92 g of a sucrose stearate having an HLB of 3 (manufactured by Mitsubishi-Kagaku Foods Corporation, Ryoto sugar ester S-370) and 0.92 g of a maleic anhydride-modified ethylene-propylene copolymer (manufactured by Mitsui Chemicals, Inc., Hi-wax 1105A) were added thereto. The temperature was raised to 80°C while stirring, to dissolve the surfactant, and thereafter the solution was cooled to 50°C.

On the other hand, a 500 mL-Erlenmeyer flask was charged with 92 g (1.02 mol) of an 80% by mass aqueous solution of acrylic acid, and 146.0 g of a 21% by mass aqueous sodium hydroxide was added dropwise thereto with cooling from external to neutralize 75% by mol. Thereafter, 0.11 g (0.41 mmol) of potassium persulfate as a radical polymerization initiator and 9.2 mg (0.06 mmol) of N,N'-methylenebisacrylamide as an internal crosslinking agent were added thereto to dissolve, to prepare an aqueous monomer solution for the first step.

The entire amount of this aqueous monomer solution for the first step was added to the above separable flask, and the internal of the system was sufficiently replaced with nitrogen. Thereafter, the flask was immersed in a water bath at 70°C to raise the temperature, and the first-step polymerization was carried out and then cooled to room temperature, to give a polymerization slurry of the first step.

On the other hand, another 500 mL-Erlenmeyer flask was charged with 128.8 g (1.43 mol) of an 80% by mass aqueous solution of acrylic acid, and 159.0 g of a 27% by mass aqueous sodium hydroxide was added dropwise thereto with cooling from external to neutralize 75% by mol. Thereafter, 0.16 g (0.59 mmol) of potassium persulfate as a radical polymerization initiator and 12.9 mg (0.08 mmol) of N,N'-methylenebisacrylamide as an internal crosslinking agent were added thereto to dissolve, to prepare an aqueous monomer solution for the second step.

The entire amount of this aqueous monomer solution for the second step was added to the above polymerization slurry of the first step, and the internal of the system was sufficiently replaced with nitrogen. Thereafter, the flask was again immersed in a water bath at 70°C to raise the temperature, and the second-step polymerization was carried out.

After the second-step polymerization, the reaction mixture was heated with an oil bath at 125°C, and 260 g of water was removed from the system by azeotropic distillation of n-heptane and water while refluxing n-heptane. Further, n-heptane in the internal of the system was removed by distillation, to give 237.5 g of the water-absorbent resin precursor (A1), which is an aggregate of spherical particles and has an average particle diameter of 359 μm. The water-absorbent resin precursor at this point had a drying loss (water content) of 7.1% by mass.

Example 1

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane. The internal temperature was raised to 80°C. Thereafter, 8.0 g of water was added thereto, and the mixture was kept at the same temperature for 10 minutes (the water content of the water-absorbent resin precursor: 19.9% by mass).

Thereafter, 5.0 g of a 10% by mass aqueous solution of ((3-ethyloxetan-3-yl)methyl) methanesulfonate (2.6 mmol) obtained in Synthesis Example 1 was added thereto as a post-crosslinking agent, and mixed. The mixture obtained was heated with an oil bath at 125°C, and subjected to a post-crosslinking reaction for 4 hours while distilling away water and n-heptane from the mixture obtained and drying, to give a water-absorbent resin. The drying loss (water content) was 4.3% by mass. The physical properties of the water-absorbent resin were measured by the methods described above, and the results were shown in Table 1.

Example 2

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane. The internal temperature was raised to 80°C. Thereafter, 8.0 g of water was added thereto, and the mixture was kept at the same temperature for 10 minutes (the water content of the water-absorbent resin precursor: 19.9% by mass).

Thereafter, 5.0 g of a 10% by mass aqueous solution of ((3-ethyloxetan-3-yl)methyl) chloromethanesulfonate (2.2 mmol) obtained in Synthesis Example 2 was added thereto as a post-crosslinking agent, and mixed. This mixture was heated with an oil bath at 125°C, and subjected to a post-crosslinking reaction for 4 hours while distilling away water and n-heptane from the mixture obtained and drying, to give a water-absorbent resin. The drying loss (water content)

was 4.0% by mass. The physical properties of the water-absorbent resin were measured by the methods described above, and the results were shown in Table 1.

Example 3

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane. The internal temperature was raised to 80°C. Thereafter, 3.5 g of water was added thereto, and the mixture was kept at the same temperature for 10 minutes (the water content of the water-absorbent resin precursor: 13.2% by mass).

Thereafter, 5.0 g of a 10% by mass aqueous solution of ((3-ethyloxetane-3-yl)methyl) methanesulfonate (2.6 mmol) obtained in Synthesis Example 1 was added thereto as a post-crosslinking agent and mixed. This mixture was heated with an oil bath at 140°C, and subjected to a post-crosslinking reaction for 1 hour, while distilling away water and n-heptane from the mixture obtained and drying, to give a water-absorbent resin. The drying loss (water content) was 5.2% by mass. The physical properties of the water-absorbent resin were measured by the methods described above, and the results were shown in Table 1.

Example 4

A 2-L cylindrical round bottomed separable flask having an internal diameter of 110 mm, equipped with a reflux condenser, a dropping funnel, a nitrogen gas inlet tube, a stirrer, and a stirring blade was prepared. This flask was charged with 340 g of n-heptane, and 0.92 g of a sucrose stearate having an HLB of 3 (manufactured by Mitsubishi-Kagaku Foods Corporation, Ryoto sugar ester S-370) and 0.92 g of a maleic anhydride-modified ethylene-propylene copolymer (manufactured by Mitsui Chemicals, Inc., Hi-wax 1105A) were added thereto. The temperature was raised to 80°C while stirring, to dissolve the surfactant, and thereafter the solution was cooled to 50°C.

On the other hand, a 500 mL-Erlenmeyer flask was charged with 92 g (1.02 mol) of an 80% by mass aqueous solution of acrylic acid, and 146.0 g of a 21% by mass aqueous sodium hydroxide was added dropwise thereto with cooling from external to neutralize 75% by mol. Thereafter, 0.11 g (0.41 mmol) of potassium persulfate as a radical polymerization initiator and 9.2 mg (0.06 mmol) of N,N'-methylenebisacrylamide as an internal-crosslinking agent were added thereto to dissolve, to prepare an aqueous monomer solution for the first step.

The entire amount of this aqueous monomer solution for the first step was added to the above separable flask, and the internal of the system was sufficiently replaced with nitrogen. Thereafter, the flask was immersed in a water bath at 70°C to raise the temperature, and the first-step polymerization was carried out and then cooled to a room temperature, to give a polymerization slurry of the first step.

On the other hand, another 500 mL-Erlenmeyer flask was charged with 128.8 g (1.43 mol) of an 80% by mass aqueous solution of acrylic acid, and 159.0 g of a 27% by mass aqueous sodium hydroxide was added dropwise thereto with cooling from external to neutralize 75% by mol. Thereafter, 0.16 g (0.59 mmol) of potassium persulfate as a radical polymerization initiator and 12.9 mg (0.08 mmol) of N,N'-methylenebisacrylamide as an internal-crosslinking agent were added thereto to dissolve, to prepare an aqueous monomer solution for the second step.

The entire amount of this aqueous monomer solution for the second step was added to the above polymerization slurry of the first step, and the internal of the system was sufficiently replaced with nitrogen. Thereafter, the flask was again immersed in a water bath at 70°C to raise the temperature, and the second-step polymerization was carried out.

After the second-step polymerization, the temperature of the reaction solution was raised in an oil bath at 125°C, and 260 g of water was removed outside the system while refluxing n-heptane by azeotropic distillation of n-heptane and water, to give 266 g of a water-absorbent resin precursor (A2) (water content: 18.3% by mass.). To the resulting water-absorbent resin precursor (A2) (Theoretical amount of the water-soluble ethylenically unsaturated monomer used to obtain the precursor: 2.45 mol), 23.6 g of a 10% by mass aqueous solution of ((3-ethyloxetan-3-yl)methyl) chloromethanesulfonate (10.3 mmol) obtained in Synthesis Example 2 as a post-crosslinking agent was added thereto. This reaction solution was heated with an oil bath at 140°C, and subjected to a post-crosslinking reaction for 1 hour while distilling away water and n-heptane from the mixture obtained and drying, to give 238 g of a water-absorbent resin. The drying loss (water content) was 5.4% by mass. The physical properties of the water-absorbent resin were measured by the methods described above, and the results were shown in Table 1.

Comparative Example 1

For the water-absorbent resin precursor (A1) obtained in Production Example 1, the physical properties thereof were measured by the methods described above, and the results were shown in Table 1.

Comparative Example 2

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane.

The internal temperature was raised to 80°C. Thereafter, 5.0 g of a 10% by mass aqueous solution of 1,4-butanediol (5.5 mmol) was added thereto as a post-crosslinking agent, and mixed. This mixture was heated with an oil bath at 180°C, and subjected to a post-crosslinking reaction for 2 hours while distilling away water and n-heptane from the mixture obtained and drying, to give a water-absorbent resin. The drying loss (water content) was 2.0% by mass. The physical properties of the water-absorbent resin were measured by the methods described above, and the results were shown in Table 1.

Comparative Example 3

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane.

The internal temperature was raised to 80°C. Thereafter, 5.0 g of a 10% by mass aqueous solution of 3-methyl-3-oxetanemethanol (4.9 mmol) was added thereto as a post-crosslinking agent, and mixed. This mixture was heated with an oil bath at 180°C, and subjected to a post-crosslinking reaction for 2 hours while distilling away water and n-heptane from the mixture obtained and drying, to give a water-absorbent resin. The drying loss (water content) was 3.2% by mass. The physical properties of the water-absorbent resin were measured by the methods described above, and the results were shown in Table 1.

Comparative Example 4

A 2-L cylindrical round bottomed separable flask having an internal diameter of 110 mm, equipped with a reflux condenser, a dropping funnel, a nitrogen gas inlet tube, a stirrer, and a stirring blade was charged with 50 g of the water-absorbent resin precursor (A1) obtained in Production Example 1 (Theoretical amount of the water-soluble ethylenically unsaturated monomer used to obtain the precursor: 0.52 mol) and 80 g of n-heptane.

The internal temperature was raised to 80°C. Thereafter, 5.0 g of a 10% by mass aqueous solution of ethylene carbonate (5.7 mmol) was added thereto as a post-crosslinking agent, and mixed. This mixture was heated with an oil bath at 180°C, and subjected to a post-crosslinking reaction for 2 hours while distilling away water and n-heptane from the mixture obtained and drying, to give a water-absorbent resin. The drying loss (water content) was 1.1% by mass. The physical properties of the water-absorbent resin were measured by the methods described above and the results were shown in Table 1.

[Table 1]

| | Temperature | Time | Water-Retention Capacity of Physiological Saline | Water-Absorption Capacity of Physiological Saline under Load of 2.07 kPa | WaterSoluble Substance |
|---|---|---|---|---|---|
| | [°C] | [hr] | [g/g] | [mL/g] | [% by mass] |
| Ex. 1 | 125 | 4 | 39 | 30 | 10 |
| Ex. 2 | 125 | 4 | 43 | 33 | 13 |
| Ex. 3 | 140 | 1 | 40 | 31 | 8 |
| Ex. 4 | 140 | 1 | 43 | 32 | 14 |
| Comp. Ex. 1 | - | - | 66 | 6 | 27 |
| Comp. Ex. 2 | 180 | 2 | 44 | 22 | 22 |
| Comp. Ex. 3 | 180 | 2 | 42 | 24 | 24 |
| Comp. Ex. 4 | 180 | 2 | 44 | 26 | 16 |

It can be seen from the results shown in Table 1 that the crosslinking reaction in each Example progresses at 160°C or lower, and that the water-absorbent resin obtained in each Example is excellent in various properties such as water-retention capacity and water-absorption capacity under load, and a low water-soluble substance.

The water-absorbent resin obtained by the method of the present invention is excellent in various properties such as water-retention capacity and water-absorption capacity under load, and also gives consideration to safety such as having a reduced water-soluble substance. Therefore, the water-absorbent resin disclosed herein can be preferably used, for example, in hygienic materials such as disposable diaper, incontinence pad and sanitary napkin, in particular, in disposable diaper.

## Claims

1. A method for producing a water-absorbent resin, **characterized by** adding an oxetane compound represented by the following general formula (1):

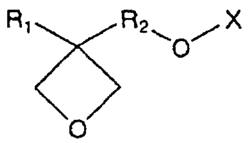

(1)

wherein $R_1$ is an alkyl group having 1 to 6 carbon atoms; $R_2$ is an alkanediyl group having 1 to 6 carbon atoms; and X is a group containing at least one group selected from the group consisting of carbonyl group, phosphoryl group, and sulfonyl group,
to a water-absorbent resin precursor obtainable by polymerizing water-soluble ethylenically unsaturated monomers, and subjecting the components to a post-crosslinking reaction while heating.

2. The method for producing a water-absorbent resin according to claim 1, wherein X is a group containing sulfonyl group.

3. The method for producing a water-absorbent resin according to claim 1 or 2, wherein the amount of the oxetane compound is from 0.001 to 5% by mol, based on a total amount of the water-soluble ethylenically unsaturated monomers used for obtaining the water-absorbent resin precursor.

## Patentansprüche

1. Ein Verfahren zur Herstellung eines wasserabsorbierenden Harzes, **gekennzeichnet durch** das Zugeben einer Oxetanverbindung, die **durch** die folgende allgemeine Formel (1) dargestellt ist:

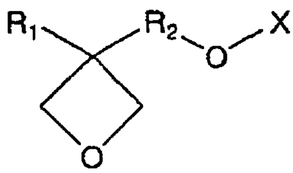

(1)

wobei $R_1$ ein Alkylrest mit 1 bis 6 Kohlenstoffatomen ist; $R_2$ ein Alkandiylrest mit 1 bis 6 Kohlenstoffatomen ist; und X ein Rest ist, der mindestens einen Rest, ausgewählt aus der Gruppe bestehend aus einem Carbonylrest, Phosphorylrest und Sulfonylrest enthält,
zu einer wasserabsorbierenden Harzvorstufe, die **durch** Polymerisieren von wasserlöslichen ethylenisch ungesättigten Monomeren erhältlich ist, und Unterziehen der Komponenten einer anschließenden Vernetzungsreaktion unter Erwärmung.

2. Das Verfahren zur Herstellung eines wasserabsorbierenden Harzes gemäß Anspruch 1, wobei X ein Rest ist, der einen Sulfonylrest enthält.

3. Das Verfahren zur Herstellung eines wasserabsorbierenden Harzes gemäß Anspruch 1 oder 2, wobei die Menge

der Oxetanverbindung 0,001 bis 5 mol% beträgt, basierend auf einer Gesamtmenge der wasserlöslichen ethylenisch ungesättigten Monomere, die zur Herstellung der wasserabsorbierenden Harzvorstufe verwendet werden.

## Revendications

1. Procédé de production d'une résine absorbant l'eau, **caractérisé par** l'addition d'un composé oxétane représenté par la formule générale (1) suivante :

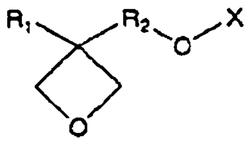

(1)

dans laquelle $R_1$ est un groupe alkyle ayant 1 à 6 atomes de carbone ; $R_2$ est un groupe alcanediyle ayant 1 à 6 atomes de carbone ; et X est un groupe contenant au moins un groupe sélectionné dans le groupe consistant en un groupe carbonyle, un groupe phosphoryle et un groupe sulfonyle, à un précurseur de résine absorbant l'eau pouvant être obtenu en polymérisant des monomères éthyléniquement insaturés solubles dans l'eau, et en soumettant les composants à une réaction post-réticulation tout en chauffant.

2. Procédé de production d'une résine absorbant l'eau selon la revendication 1, dans lequel X est un groupe contenant un groupe sulfonyle.

3. Procédé de production d'une résine absorbant l'eau selon la revendication 1 ou 2, dans lequel la quantité du composé oxétane est de 0,001 à 5 % en mol, en se basant sur une quantité totale des monomères éthyléniquement insaturés solubles dans l'eau utilisés pour obtenir le précurseur de résine absorbant l'eau.

[Figure 1]

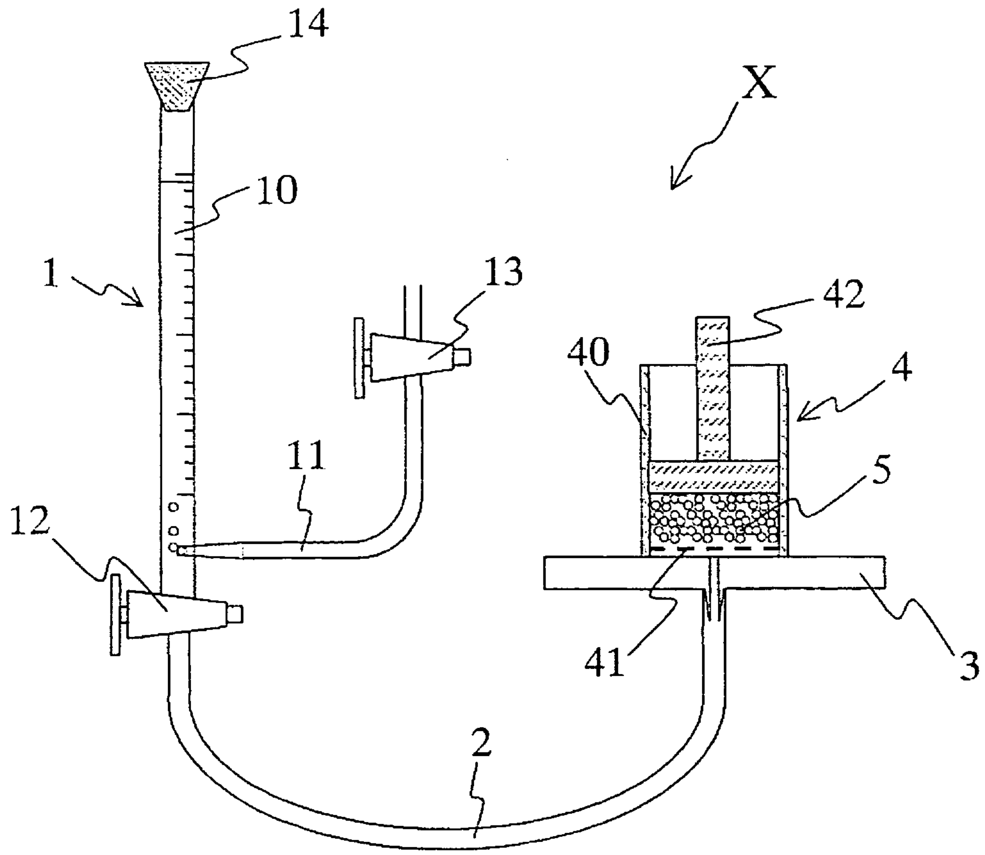

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002194239 A
- JP 2003313446 A
- JP HEI08027278 B
- JP 2000197818 A
- WO 2006033477 A1
- JP 2000319577 A